# EUROPÄISCHE PATENTSCHRIFT

(11) **EP 3 049 698 B1**
(45) Veröffentlichungstag und Bekanntmachung des Hinweises auf die Patenterteilung: **01.05.2019**
(21) Anmeldenummer: 14766950.1
(22) Anmeldetag: 10.09.2014
(51) Int. Cl.: F16J 15/08

(54) **ZWISCHENPLATTE**
INTERMEDIATE PLATE
PLAQUE INTERMÉDIAIRE

(30) Priorität: 25.09.2013 DE 102013219295
(43) Veröffentlichungstag der Anmeldung: 03.08.2016
(73) Patentinhaber: ElringKlinger AG, 72581 Dettingen (DE)
(72) Erfinder: SCHÖLLHAMMER, Jochen, 72581 Dettingen (DE); ANHORN, Thomas, 72581 Dettingen (DE)
(74) Vertreter: Hoeger, Stellrecht & Partner Patentanwälte mbB
(86) Internationale Anmeldenummer: PCT/EP2014/069300
(87) Internationale Veröffentlichungsnummer: WO 2015/043955

(56) Entgegenhaltungen:
- EP-A1- 2 072 818
- FR-A1- 2 961 574
- US-A1- 2006 232 017
- US-A1- 2008 211 197

## Beschreibung

Die Erfindung betrifft eine Kombination aus Gehäuseteilen einer fluidbetriebenen Steuereinheit, insbesondere einer Getriebeeinheit, und eine zwischen den Gehäuseteilen montierte Zwischenplatte umfassend eine plattenförmig ausgebildete Zentraleinheit und beiderseits der Zentraleinheit jeweils ein eine Abdichtung zwischen der Zentraleinheit und dem dieser gegenüberliegenden Gehäuseteil bewirkendes Dichtungssystem, welches auf der jeweiligen Seite der Zentraleinheit angeordnete und um Durchlässe herum abdichtende Dichtelemente umfasst.

Im Zusammenhang mit einer Zylinderkopfdichtung ist aus der FR 2 961 574 eine Zwischenplatte bekannt, welche eine plattenförmig ausgebildete Zentraleinheit und beiderseits der Zentraleinheit jeweils ein Dichtungssystem zur Abdichtung zwischen der Zentraleinheit und den dieser gegenüberliegenden Teilen umfasst, wobei das Dichtungssystem auf der jeweiligen Seite der Zentraleinheit angeordnete und um Durchlässe herum abdichtende Dichtelemente umfasst.

Es besteht das Problem, eine möglichst gute Abdichtung zwischen der Zentraleinheit und dem jeweiligen Gehäuseteil zu erreichen, die auch bei Deformationen aller Art der Gehäuseteile und der Zentraleinheit die Dichtigkeit aufrecht erhält, und das selbst bei den hohen üblicherweise bei einer Getriebeeinheit vorliegenden Fluiddrücken.

Diese Aufgabe wird bei einer Kombination der eingangs beschriebenen Art erfindungsgemäß durch die Merkmale des Anspruchs 1 gelöst.

Der Vorteil eines derartigen Elastomermaterials ist nicht nur dessen Elastizität, um unterschiedliche Höhendifferenzen zwischen der Zentraleinheit und dem jeweiligen Gehäuseteil ausgleichen zu können, sondern auch die klebende Wirkung, die ein Haften des das Dichtelement bildenden Elastomermaterials an dem jeweiligen Gehäuseteil zur Folge hat und somit in der Lage ist, insbesondere parallel zur Flächenausdehnung der Zwischenplatte verlaufende Deformationen auszugleichen, ohne die Schicht aus Elastomermaterial durch Reibung bei derartigen Deformationen zu schädigen, da durch das klebende Anhaften des Elastomermaterials an dem jeweiligen Gehäuseteil das Elastomermaterial keine Relativbewegung mehr zu dem jeweiligen Gehäuseteil ausführt und dabei in der Lage ist, Scherbewegungen auszuführen und somit parallel zur flächenhaften Ausdehnung der Zwischenplatte gerichtete Deformationen auszugleichen, ohne dass die Gehäuseteile an der an diesen jeweils anliegenden Oberfläche der Schicht aus Elastomermaterial reiben und somit langfristig zu einer Beschädigung des Elastomermaterials führen.

Das Elastomermaterial kann in unterschiedlichster Art und Weise ausgebildet sein.

Beispielsweise könnte das Elastomermaterial ein Silikonmaterial umfassen.

Eine besonders zweckmäßige Lösung sieht vor, dass das Elastomermaterial ein teilpolymerisiertes Kautschukmaterial umfasst.

Ein derartiges teilpolymerisiertes Kautschukmaterial weist beispielsweise einen Polymerisationsgrad auf, der im Bereich zwischen 15 % oder mehr und 90% oder weniger liegt.

Eine besonders vorteilhafte Form des Polymermaterials sieht vor, dass dieses einen Fluorpolymerkautschuk umfasst.

Hinsichtlich der Dicke der Schicht des Elastomermaterials wurden bislang keine näheren Angaben gemacht.

So sieht eine vorteilhafte Lösung vor, dass die Schicht aus Elastomermaterial eine Dicke von 5 µm oder mehr, besser 10 µm oder mehr, noch besser 15 µm oder mehr, aufweist.

Dabei sollte die Schicht aus Elastomermaterial nicht beliebig dick werden.

So sieht eine zweckmäßige Lösung vor, dass die Schicht aus Elastomermaterial eine Dicke von 100 µm oder weniger, besser 50 µm oder weniger, aufweist.

Prinzipiell ist es bei einer ausschließlich aus Elastomermaterial gebildeten Schicht ausreichend, wenn diese eine Dicke von 30 µm oder weniger aufweist.

Allerdings kann in das Elastomermaterial auch ein weiteres Element eingebettet sein.

Im Falle einer Einbettung eines Elements in das Elastomermaterial ist vorzugsweise vorgesehen, dass dieses eine Dicke von 50 µm oder mehr aufweist und in seiner Dicke bis zu 100 µm oder weniger reichen kann, wobei eine derartige Schicht beispielsweise auf einer Seite oder auf beiden Seiten des einzubettenden Elements aufgetragen werden kann, so dass die Schicht auch in der Lage ist, Oberflächenunebenheiten dieses Elements auszugleichen.

Des Weiteren lässt sich das erfindungsgemäß verwendete Elastomermaterial durch weitere Parameter zweckmäßigerweise charakterisieren.

So sieht eine vorteilhafte Lösung vor, dass das Elastomermaterial eine Klebewirkung aufweist, die bei Entfernung der Zentraleinheit von dem jeweiligen Gehäuseteil zu einer Abzugsspannung von 0,1 KPa oder mehr führt, wobei als relevante Fläche die Gesamtfläche angesetzt ist, über die sich die Zentraleinheit und das Gehäuseteil in ihrem Überlappungsbereich erstrecken.

Hinsichtlich des Auftrags der Schicht aus Elastomermaterial sind ebenfalls die unterschiedlichsten Realisierungsmöglichkeiten denkbar.

So sieht beispielsweise eine Realisierungsmöglichkeit vor, dass die Schicht aus Elastomermaterial durch ein Siebdruckverfahren aufgetragen ist.

Eine andere vorteilhafte Lösung sieht vor, dass die Schicht aus Elastomermaterial durch eine Walzenbeschichtung aufgetragen ist.

Dabei kann die Schicht aus Elastomermaterial vollflächig auf die jeweilige Seite der Zentraleinheit aufgetragen sein.

Eine andere alternative Lösung sieht vor, dass die Schicht aus Elastomermaterial partiell als lokale Schicht auf die jeweilige Seite der Zentraleinheit aufgetragen ist.

Hinsichtlich der Ausbildung der Zentraleinheit wurden im Zusammenhang mit den bisher beschriebenen Ausführungsbeispielen keine näheren Angaben gemacht.

So sieht eine vorteilhafte Lösung vor, dass die Zentraleinheit eine Zentralplatte umfasst.

Eine derartige Zentralplatte kann beispielsweise das einzige Element der Zentraleinheit sein, so dass die Zentralplatte in diesem Fall auf ihren einander gegenüberliegenden Flachseiten die Dichtelemente trägt.

Alternativ oder ergänzend dazu ist es aber auch vorteilhaft, wenn die Zentraleinheit eine funktionsdefinierende Lage aufweist.

Mit einer derartigen funktionsdefinierenden Lage lassen sich in der Zwischenplatte auch noch das Fluid beeinflussende oder auf das Fluid einwirkende Funktionen realisieren, die ansonsten in die Gehäuseteile zu integrieren wären.

Insbesondere ist in einem derartigen Fall vorgesehen, dass die funktionsdefinierende Lage einer der Flachseiten der Zentralplatte zugewandt angeordnet ist.

Da üblicherweise die Zentralplatte einen oder mehrere Durchbrüche für das Fluid aufweist, ist in diesem Fall vorzugsweise vorgesehen, dass die funktionsdefinierende Lage mindestens einen mindestens einem Durchbruch der Zentralplatte zugeordneten Funktionsbereich aufweist.

Das heißt, dass in diesem Fall durch die funktionsdefinierende Lage noch die Möglichkeit besteht, einem Durchbruch der Zentraleinheit einen Funktionsbereich zuzuordnen und somit diesen Durchbruch noch mit einer definierten Funktion zu betreiben.

Beispielsweise lässt sich dies dadurch realisieren, dass der mindestens eine Funktionsbereich mit dem mindestens einen Durchbruch der Zentralplatte überlappend angeordnet ist, so dass der Funktionsbereich auf das den Durchbruch durchströmende Fluid wirken kann.

Beispielsweise ist dabei vorgesehen, dass der mindestens eine Funktionsbereich eine Drosselöffnung aufweist, die somit einem Durchbruch der Zentraleinheit zugeordnet werden kann.

Eine andere Möglichkeit sieht vor, dass der mindestens eine Funktionsbereich ein Siebelement aufweist, das damit ebenfalls einem Durchbruch der Zentralplatte zugeordnet werden kann.

Die funktionsdefinierende Lage kann dabei in unterschiedlichster Art und Weise realisiert werden.

Beispielsweise ist es denkbar, die funktionsdefinierende Lage so auszubilden, dass diese ein mit mindestens einem Funktionsbereich versehenes Flachmaterial umfasst.

Insbesondere ist dabei vorgesehen, dass das Flachmaterial beispielsweise ein Blechmaterial ist, aus dem die Funktionsbereiche durch Materialabtrag, beispielsweise Stanzen, Bohren oder Schneiden gebildet werden.

Dadurch lassen sich in der Lage beispielsweise Drosselöffnungen oder aber auch Siebelemente ausbilden.

Eine andere vorteilhafte Lösung sieht vor, dass die funktionsdefinierende Lage ein mit dem mindestens einen Funktionsbereich versehenes Gitter umfasst. Ein derartiges Gitter kann beispielsweise ein aus einem Flachmaterial, beispielsweise Blechmaterial ausgestanztes oder ausgeschnittenes Gitter sein.

Vorteilhafterweise kann ein derartiges Gitter aber auch ein geflochtenes oder im Falle von Kunststoff ein gespritztes Gitter sein.

Mit einer derartigen, aus einem Gitter gebildeten funktionsdefinierenden Lage lassen sich beispielsweise Siebelemente aber auch Drosselelemente je nach Dimensionierung der Gitteröffnungen als Funktionsbereiche bilden.

Im Fall einer Verwendung einer funktionsdefinierenden Lage in Verbindung mit einer Zentralplatte ist vorzugsweise vorgesehen, dass zwischen der funktionsdefinierenden Lage und der Zentralplatte eine Schicht aus einem Verbindungsmaterial angeordnet ist, welches die beiden miteinander verbindet.

Bei den vorstehend beschriebenen Lösungen einer Kombination einer Zentralplatte mit einer funktionsdefinierenden Lage ist vorgesehen, dass die funktionsdefinierende Lage dem jeweiligen Gehäuseteil zugewandt ist.

Da eine derartige funktionsdefinierende Lage auch aus Materialien mit nicht glatten Oberflächen gebildet werden kann, sieht eine weitere vorteilhafte Lösung vor, dass die funktionsdefinierende Lage zwischen der Zentralplatte und einer Abdeckplatte angeordnet ist, so dass die funktionsdefinierende Lage selbst nicht einem der Gehäuseteile zugewandt angeordnet werden muss.

In diesem Fall ist es zweckmäßig, wenn die funktionsdefinierende Lage dicht abschließend mit der Abdeckplatte und der Zentralplatte verbunden ist, so dass im Bereich der funktionsdefinierenden Lage keine Leckagen auftreten können.

Beispielsweise ist hierzu vorgesehen, dass zwischen der Zentralplatte und der funktionsdefinierenden Lage sowie zwischen der Abdeckplatte und der funktionsdefinierenden Lage jeweils eine Schicht aus einem Verbindungsmaterial angeordnet ist.

In einem vorteilhaften Fall lässt sich die funktionsdefinierende Lage in das Verbindungsmaterial einbetten.

Besonders vorteilhaft ist eine derartige Einbettung der funktionsdefinierenden Lage in das Verbindungsmaterial dann, wenn die funktionsdefinierende Lage Öffnungen aufweist, welche von dem Verbindungsmaterial durchsetzt sind.

Hinsichtlich der Ausbildung des Verbindungsmaterials wurden bislang keine näheren Angaben gemacht.

So ist es grundsätzlich ausreichend, wenn das Verbindungsmaterial ein klebend wirkendes Material ist.

Um eine ausreichende Dichtigkeit und insbesondere keine aufgrund einer Versprödung eintretenden Undichtigkeiten zu erhalten, ist vorzugsweise vorgesehen, dass das Verbindungsmaterial ein Elastomermaterial ist.

Eine besonders günstige Lösung sieht vor, dass das Verbindungsmaterial dasselbe Elastomermaterial wie bei den Dichtelementen ist.

Bezüglich der relativen Anordnung der Dichtelemente zu der Zentralplatte wurden bislang keine näheren Angaben gemacht.

So sieht eine vorteilhafte Lösung vor, dass die Zentralplatte auf einer ersten Flachseite eines der Dichtelemente trägt.

Im einfachsten Fall ist ferner vorgesehen, dass die Zentralplatte auf einer zweiten Flachseite eines der Dichtelemente trägt, so dass in diesem Fall die Zentraleinheit ausschließlich durch die Zentralplatte gebildet ist.

Im Fall des Vorhandenseins einer funktionsdefinierenden Lage ist zweckmäßigerweise vorgesehen, dass diese auf ihrer der Zentralplatte abgewandten Seite eines der Dichtelemente trägt.

In diesem Fall lässt sich das Dichtelement besonders einfach ausbilden, wenn das Dichtelement aus dem Elastomermaterial die funktionsdefinierende Lage einbettet.

Im Fall des Vorhandenseins einer Abdeckplatte ist es außerdem zweckmäßig, wenn die Abdeckplatte auf ihrer der Zentraleinheit abgewandten Seite eines der Dichtelemente trägt.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine schematische perspektivische Darstellung einer erfindungsgemäßen Steuereinheit mit zwei demontierten und im Abstand voneinander positionierten Gehäuseteilen sowie einer zwischen den Gehäuseteilen liegenden erfindungsgemäßen Zwischenplatte;
- Fig. 2: einen ausschnittsweise vergrößerten Schnitt durch ein erstes Ausführungsbeispiel einer erfindungsgemäßen Zwischenplatte bei fester Montage derselben zwischen den zwei Gehäuseteilen im Bereich eines Durchlasses für ein Fluid;
- Fig. 3: einen Schnitt ähnlich Fig. 2 bei einem zweiten Ausführungsbeispiel einer erfindungsgemäßen Zwischenplatte;
- Fig. 4: einen Schnitt ähnlich Fig. 2 bei einem dritten Ausführungsbeispiel einer erfindungsgemäßen Zwischenplatte und
- Fig. 5: einen Schnitt ähnlich Fig. 2 bei einem vierten Ausführungsbeispiel einer erfindungsgemäßen Zwischenplatte.

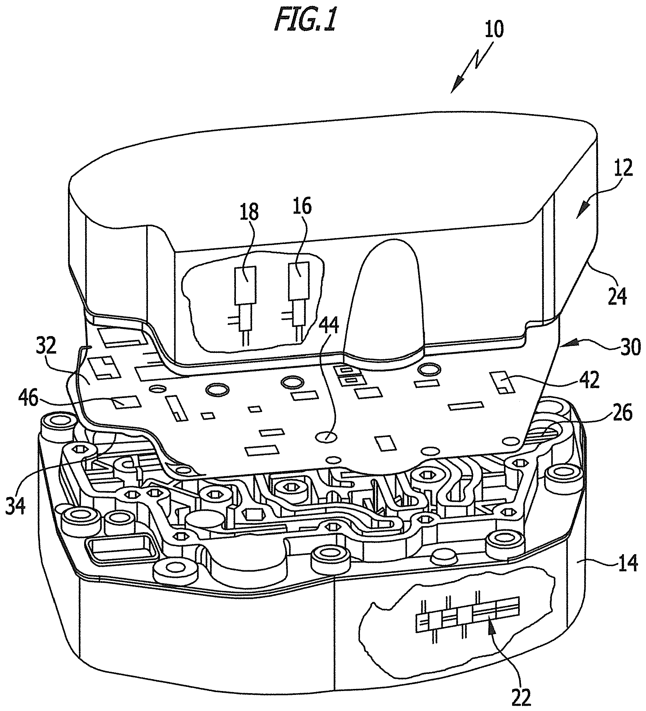

Eine in Fig. 1 schematisch dargestellte und als Ganzes mit 10 bezeichnete Steuereinheit für fluidbetriebene Verbraucher, beispielsweise für fluidbetriebene Getriebeeinheiten, insbesondere Getriebeeinheiten für Kraftfahrzeuge, umfasst ein erstes Gehäuseteil 12, insbesondere aus Metall, und ein zweites Gehäuseteil 14, insbesondere aus Metall, von denen beispielsweise das erste Gehäuseteil Ventile 16, 18 und das zweite Gehäuseteil 14 beispielsweise einen Schieber 22 aufweist, wobei diese jeweils einen Fluss von Fluid in dem jeweiligen Gehäuseteil 12, 14 steuern oder regeln.

Die beiden Gehäuseteile 12, 14 weisen einander zugewandte Kanalseiten 24 und 26 auf, welche so ausgebildet sind, dass das Fluid von dem einen Gehäuseteil 12, 14 in das jeweils andere Gehäuseteil 14, 12 übertreten kann.

Zwischen diesen Kanalseiten 24 und 26 der Gehäuseteile 12, 14 ist eine als Ganzes mit 30 bezeichnete Zwischenplatte eingesetzt, die an der Kanalseite 24 des ersten Gehäuseteils 12 mit einer ersten Seite 32 und an der Kanalseite 26 des zweiten Gehäuseteils 14 mit einer zweiten Seite 34 anliegt und jeweils mit den Kanalseiten 24, 26 dicht abschließt, wobei in der Zwischenplatte 30 Durchlässe, beispielsweise die Durchlässe 42, 44, 46 und eventuell noch weitere Durchlässe, vorgesehen sind, durch welche ein Übertreten des Fluids von einem Gehäuseteil 12, 14 in das andere Gehäuseteil 14, 12 erfolgt.

Dabei ermöglichen einige der Durchlässe, beispielsweise die Durchlässe 42 und 46, ein ungehindertes Übertreten des Fluids von dem einen Gehäuseteil 12, 14 in das jeweils andere Gehäuseteil 14, 12, ergänzend dazu dienen einige der Durchlässe, beispielsweise der Durchlass 44, dazu, als Funktionselement zur Beeinflussung des vom einen Gehäuseteil 12, 14 in das andere Gehäuseteil 14, 12 übertretenden Fluids, wobei durch einen derartigen Durchlass 44 beispielsweise eine gezielt anpassbare Drosselwirkung zu Steuerung von Abläufen, insbesondere zeitlichen Abläufen bei Schaltvorgängen, erreicht werden kann.

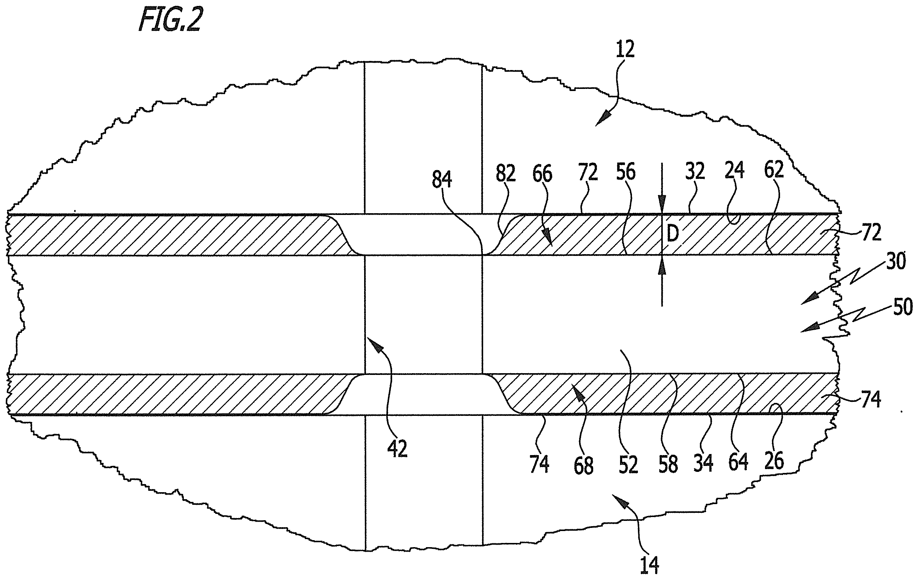

Bei dem in Fig. 1 und 2 dargestellten ersten Ausführungsbeispiel der erfindungsgemäßen Zwischenplatte 30 ist der Durchlass 44 in einer Zentraleinheit 50 angeordnet, die beim ersten Ausführungsbeispiel nur eine Zentralplatte 52 umfasst.

Die Zentraleinheit 50, beim ersten Ausführungsbeispiel durch die Zentralplatte 52 gebildet, trägt ferner auf ihren einander gegenüberliegenden Seiten 56 und 58, die mit Flachseiten 62, 64 der Zentralplatte 52 zusammenfallen, noch Dichtelemente 66 und 68, welche beispielsweise jeweils in Form von mindestens einer Schicht 72, 74 aus Elastomermaterial auf die Seiten 56 und 58, beispielsweise durch eine Walzenbeschichtung, aufgetragen sind, um eine dauerhafte und zuverlässige Abdichtung zu den Kanalseiten 24, 26 der Gehäuseteile 12, 14 zu erreichen.

Dabei liegen im zusammengebauten Zustand der Gehäuseteile 12 und 14, wie in Fig. 2 dargestellt, die Kanalseiten 24 und 26 jeweils an diesen zugewandten Oberflächen 76, 78 der Dichtelemente 66 bzw.68 dichtend an, so dass mit diesen Dichtelementen 22, 24 ein dichter Abschluss um jeden der Durchlässe 42, 44, 46 und gegebenenfalls weitere derartige Durchlässe realisierbar ist.

Das in den Schichten 72, 74 vorgesehene Elastomermaterial ist einerseits druckstandfest andererseits elastisch und außerdem so ausgebildet, dass dieses klebend an den Kanalseiten 24, 26 der Gehäuseteile 12, 14 zum Haften bringbar ist.

Das Elastomermaterial hat dabei eine Klebewirkung, die bei Entfernung der Zentraleinheit 50 von dem jeweiligen Gehäuseteil 12, 14 zu einer Abzugsspannung von 0,1 KPa oder mehr führt, wobei als relevante Fläche die Gesamtfläche angesetzt ist, über die sich die Zentraleinheit 50 und das Gehäuseteil 12, 14 in ihrem Überlappungsbereich erstrecken, so dass auch die Flächenausdehnung der Durchbrüche in die Gesamtfläche einbezogen ist.

Insbesondere lässt sich dies durch ein Elastomermaterial realisieren, welches teilpolymerisiert ist, wobei insbesondere Kautschukmaterial Verwendung findet.

Dabei liegt zweckmäßigerweise der Polymerisationsgrad des teilpolymerisierten Kautschukmaterials im Bereich zwischen15 % oder mehr sowie 90 % oder weniger.

Der Auftrag der Schichten 72, 74 erfolgt beispielsweise durch eine Walzenbeschichtung, wobei bei dem ersten Ausführungsbeispiel die Schichten 72, 74 eine Schichtdicke D im Bereich von 50 µm oder mehr bis 100 µm oder weniger, vorzugsweise beim ersten Ausführungsbeispiel im Bereich von 15 µm oder mehr bis zu 25 µm oder weniger aufweisen.

Die Schichten 72, 74 können lokal begrenzt auf die Flachseiten 56, 58 aufgetragen werden, beispielweise die Durchlässe 42, 44, 46 umschließend.

Eine andere vorteilhafte Lösung sieht vor, dass die Schichten 72, 74 vollflächig auf die Flachseiten 56, 58 aufgetragen sind.

In allen Fällen verlaufen die Schichten 72, 74 mit ihren Schichträndern 82 maximal in einem Abstand von 2 mm um einen Rand 84 des jeweiligen Durchbruchs 42, 44, 46, um möglichst nahe an dem Rand des Durchbruchs eine Abdichtung für das Druckmittel zu erhalten.

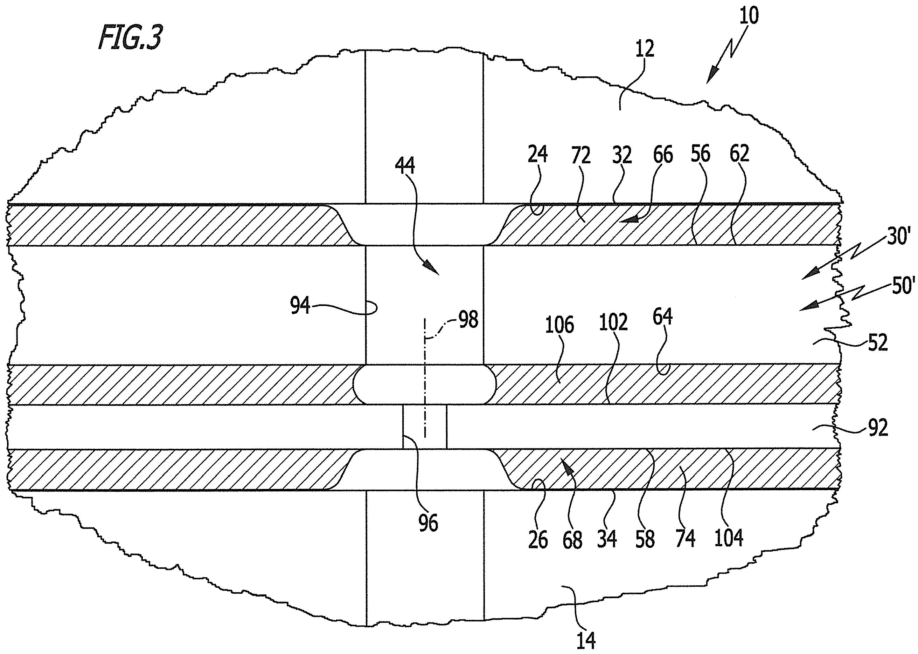

Bei einem in Fig. 3 dargestellten zweiten Ausführungsbeispiel der erfindungsgemäßen Zwischenplatte 30 umfasst die Zentraleinheit 50 nicht nur die Zentralplatte 52, sondern zusätzlich eine funktionsdefinierende Lage 92, welche eine mit einem Durchbruch 94 in der Zentralplatte 52 überlappend angeordnete Drosselöffnung 96 aufweist, wobei die Drosselöffnung 96 vorzugsweise koaxial zu einer Mittelachse 98 des Durchbruchs 94 angeordnet ist.

Somit hat der Durchbruch 94 in der Zentralplatte 52 keine unmittelbar die Strömung des Druckmittels beeinflussende Wirkung, diese erfolgt lediglich durch die Drosselöffnung 96 in der funktionsdefinierenden Lage 92.

Die funktionsdefinierende Lage 92 ist dabei beispielsweise der Flachseite 64 der Zentralplatte 52 zugewandt angeordnet, wobei beispielsweise die funktionsdefinierende Lage 92 die Zentralplatte 52 vollflächig übergreift und entweder ein einem der Durchlässe 42, 44, 46 zugeordnetes Funktionselement, wie beispielsweise die Drosselöffnung 96, aufweist oder ebenfalls einen Durchbruch, der ungefähr dem entsprechenden Durchbruch 94 in der Zentralplatte 52 entspricht, so dass dieser kein Funktionselement im Sinne einer Funktionsbeeinflussung des Druckmittels darstellt.

Die funktionsdefinierende Lage 92 weist ihrerseits zwei Flachseiten 102, 104 auf, wobei die Flachseite 102 der Flachseite 64 zugeordnet ist und die Flachseite 104 die Seite 58 der Zentraleinheit 50 bildet.

Zum dichten Abschluss zwischen der Zentralplatte 52 und der funktionsdefinierenden Lage 92 ist beispielsweise zwischen der Flachseite 102 und der Flachseite 64 ebenfalls eine Schicht 106 aus Elastomermaterial vorgesehen, wobei die Schicht 106 im einfachsten Fall identisch ist mit den Schichten 72 und 74, so dass die Schicht 106 einerseits elastisch ist, andererseits klebend sowohl eine Verbindung mit der Zentralplatte 52 als auch mit der funktionsdefinierenden Lage 92 darstellt und somit diese miteinander verbindet.

Die funktionsdefinierende Lage 92 kann in unterschiedlichster Art und Weise ausgebildet sein.

Beispielsweise ist beim zweiten Ausführungsbeispiel die funktionsdefinierende Lage als zusammenhängendes, gestanztes Flachmaterial, beispielsweise als dünnes Metallblech, ausgebildet, wobei durch Stanzen entweder funktionsdefinierende Drosselöffnungen 96 oder funktionsdefinierende Siebstrukturen oder funktionslose Durchbrüche für das Druckmittel oder für andere Medien hergestellt werden können.

Beispielsweise besteht auch die Möglichkeit, zusätzliche Durchbrüche vorzusehen, die keinen Bezug zu Strömungspfaden für das Druckmittel aufweisen, und beispielsweise dem Elastomermaterial ermöglichen, dass dieses durch die funktionsdefinierende Lage 92 hindurchtreten und somit diese besser fixieren kann.

Beispielsweise besteht bei dem zweiten Ausführungsbeispiel die Möglichkeit, mittels eines derartigen Durchbruchs eine Verbindung zwischen der Schicht 106 aus Elastomermaterial und der das Dichtelement 86 bildenden Schicht 74 zu schaffen.

Im Übrigen sind beim zweiten Ausführungsbeispiel all diejenigen Elemente, die mit denen des ersten Ausführungsbeispiels identisch sind, mit denselben Bezugszeichen versehen, so dass hinsichtlich der Beschreibung derselben und auch insbesondere hinsichtlich der Beschreibung des Elastomermaterials vollinhaltlich auf die Ausführungen zum ersten Ausführungsbeispiel verwiesen werden kann.

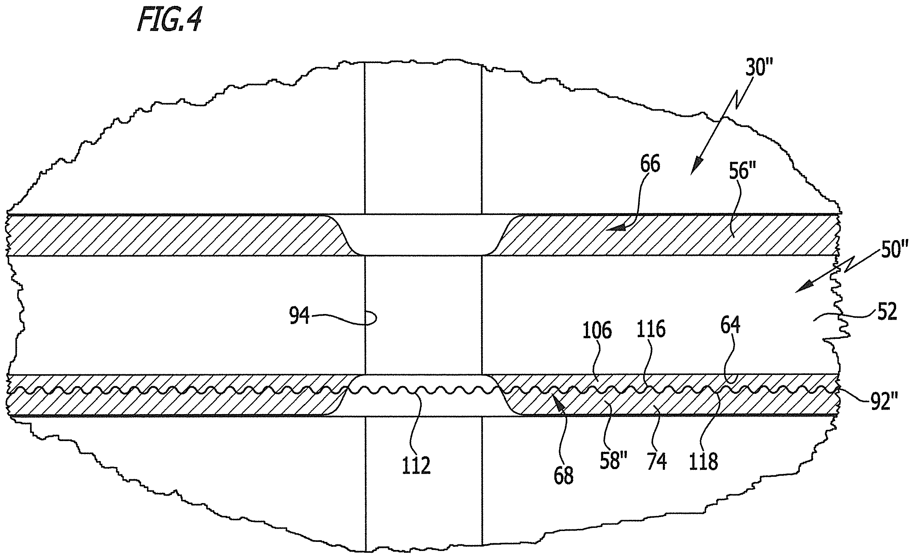

Bei einem dritten Ausführungsbeispiel einer erfindungsgemäßen Zwischenplatte, dargestellt in Fig. 4, umfasst die Zentraleinheit 50" zusätzlich zur Zentralplatte 52 noch eine funktionsdefinierende Lage 92", die in diesem Fall aus einem feinmaschigen Gittermaterial, insbesondere einem Drahtgittermaterial, hergestellt ist und ebenfalls beispielsweise sich über die gesamte Flachseite 64 der Zentralplatte 52 erstreckt.

Die funktionsdefinierende Lage 92" bildet dabei im Bereich der Durchbrüche 94 der Zentralplatte 52 diese überlappende Siebelemente 112, die es beispielsweise ermöglichen, aus dem Druckmittelstrom Partikel abzufangen und gegebenenfalls auch bei geeigneter Maschenweite ein Durchflussvolumen des Druckmittels zu begrenzen.

Dabei ist auch beim dritten Ausführungsbeispiel die funktionsdefinierende Lage 92" an der Zentralplatte 52 durch die Schicht 106 aus Elastomermaterial fixiert, die zwischen der Flachseite 64 der Zentralplatte und einer der Flachseite 64 zugewandten Sieboberfläche 116 liegt.

Aufgrund der Öffnungen der als Gitter ausgeführten funktionsdefinierenden Lage 92" kann das Elastomermaterial der Schicht 106 die funktionsdefinierende Lage 92" außerhalb der Siebelemente 112 durchsetzen und somit sich mit dem Elastomermaterial der Schicht 74 verbinden, welche das Dichtelement 68 bildet, das auf der Seite 58", gebildet durch eine der Gitteroberfläche 116 gegenüberliegende Gitteroberfläche 118, aufgetragen ist, um das Dichtelement 68 zu bilden.

Somit ist in den Bereichen außerhalb der Siebelemente 112 das die funktionsdefinierende Lage 92" bildende Gitter im Wesentlichen vollflächig in das Elastomermaterial zur Bildung der Schichten 106 und 74 eingebettet.

Im Übrigen sind bei dem dritten Ausführungsbeispiel dieselben Elemente mit denselben Bezugszeichen vorgesehen, so dass hinsichtlich der Beschreibung derselben, insbesondere der Schichten aus Elastomermaterial, vollinhaltlich auf die Ausführungen zum ersten und zweiten Ausführungsbeispiel Bezug genommen werden kann.

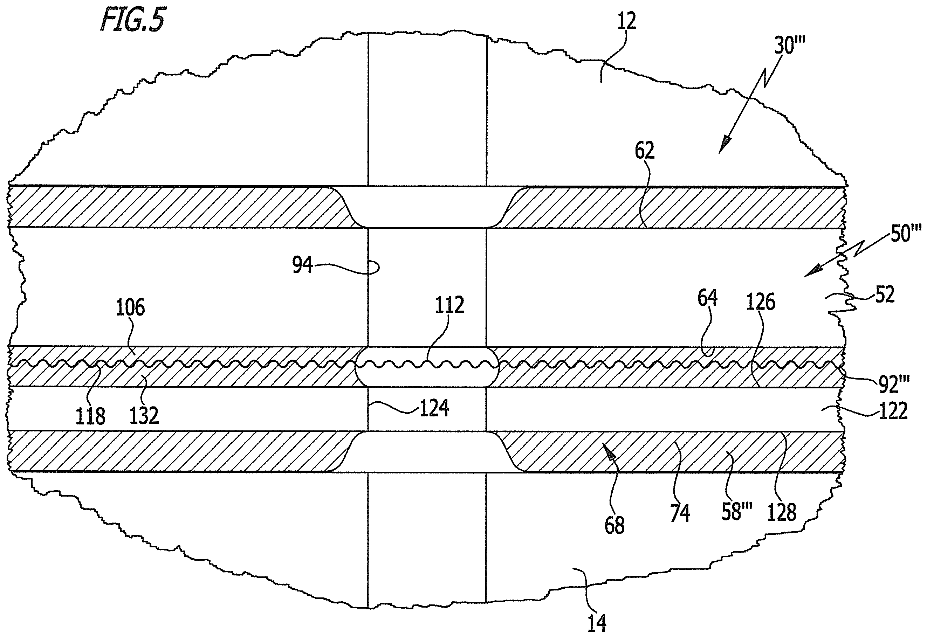

Bei einem vierten Ausführungsbeispiel der erfindungsgemäßen Zwischenplatte 30"', dargestellt in Fig. 5, umfasst die Zentraleinheit 50"' die Zentralplatte 52, eine der Flachseite 64 der Zentralplatte 52 zugewandt angeordnete funktionsdefinierende Lage 92"', die beispielsweise ebenfalls als Gitter ausgebildet sein kann und somit identisch sein kann mit der funktionsdefinierenden Lage 92", und eine auf einer der Zentralplatte 52 gegenüberliegenden Seite der funktionsdefinierenden Lage 92'" angeordnete Abdeckplatte 122, so dass die funktionsdefinierende Lage 92'" zwischen der Zentralplatte 52 und der Abdeckplatte 122 angeordnet und zwischen diesen fixiert ist.

Dabei ist die Abdeckplatte 122 mit einer der funktionsdefinierenden Lage 92'" zugewandten Flachseite 126 versehen und mit einer gegenüberliegenden Flachseite 128, welche die Seite 58"' der Zentraleinheit 50"' bildet, auf welcher die Schicht 74 aus Elastomermaterial zur Bildung des Dichtelements 68 angeordnet ist.

Die Abdeckplatte 122 ist dabei mit einem Durchbruch 124 versehen, der mit dem Durchbruch 94 der Zentralplatte 52 fluchtend angeordnet ist und zwischen diesen Durchbrüchen 94, 124 ist das von der funktionsdefinierenden Lage 92'" gebildete Siebelement 112 im Strömungspfad des die Durchbrüche 94 und 124 durchströmenden Fluids angeordnet.

Zur Fixierung der funktionsdefinierenden Lage 92'" zwischen der Abdeckplatte 122 und der Zentralplatte 52 ist einerseits die zwischen der Flachseite 64 und der Gitteroberfläche 116 vorgesehene Schicht 106 aus Elastomermaterial vorgesehen und zwischen der Gitteroberfläche 118 und der Flachseite 126 der Abdeckplatte 122 eine Schicht 132, wobei das Gittermaterial der funktionsdefinierenden Lage 92"' im Bereich seiner Öffnungen ebenfalls von dem Elastomermaterial der Schichten 106 und 132 durchsetzt ist, so dass insgesamt eine Einbettung des die funktionsdefinierende Lage 92'" bildenden Gitters zwischen den Schichten 106 und 132 erfolgt, die miteinander verbunden sind.

Im Übrigen sind auch die weiteren Elemente des vierten Ausführungsbeispiels, die mit denen der voranstehenden Ausführungsbeispiele identisch sind, mit denselben Bezugszeichen versehen, so dass hinsichtlich der Beschreibung derselben vollinhaltlich auf die Ausführungen zu den voranstehenden Ausführungsbeispielen Bezug genommen werden kann.

## Patentansprüche

1. Kombination aus Gehäuseteilen (12, 14) einer fluidbetriebenen Steuereinheit (10), insbesondere einer Getriebeeinheit, und einer zwischen den Gehäuseteilen (12, 14) montierten Zwischenplatte (30), umfassend eine plattenförmig ausgebildete Zentraleinheit (50) und beiderseits der Zentraleinheit (50) jeweils ein eine Abdichtung zwischen der Zentraleinheit (50) und dem dieser gegenüberliegenden Gehäuseteil (12, 14) bewirkendes Dichtungssystem (66, 68), welches auf der jeweiligen Seite (56, 58) der Zentraleinheit (50) angeordnete und um Durchlässe (42, 44, 46) herum abdichtende Dichtelemente (66, 68) umfasst, wobei das jeweilige Dichtungssystem als Dichtelement (66, 68) mindestens eine Schicht (72, 74) aus einem elastischen und klebend an dem jeweiligen Gehäuseteil (12, 14) haftenden Elastomermaterial umfasst.

2. Kombination nach Anspruch 1, **dadurch gekennzeichnet, dass** das Elastomermaterial ein teilpolymerisiertes Kautschukmaterial umfasst, dass insbesondere das Kautschukmaterial einen Polymerisationsgrad aufweist, der im Bereich zwischen 15 % oder mehr und 90 % oder weniger liegt.

3. Kombination nach einem der voranstehenden Ansprüche, **dadurch gekennzeichnet, dass** das Elastomermaterial einen Fluorpolymerkautschuk umfasst.

4. Kombination nach einem der voranstehenden Ansprüche, **dadurch gekennzeichnet, dass** die Schicht (72, 74) aus Elastomermaterial eine Dicke von 5 µm oder mehr aufweist, dass insbesondere die Schicht (72, 74) aus Elastomermaterial eine Dicke von 100 µm oder weniger aufweist.

5. Kombination nach einem der voranstehenden Ansprüche, **dadurch gekennzeichnet, dass** das Elastomermaterial eine Klebewirkung aufweist, die bei Entfernung der Zentraleinheit (50) von dem jeweiligen Gehäuseteil (12, 14) zu einer Abzugsspannung von 0,1 KPa oder mehr führt.

6. Kombination nach einem der voranstehenden Ansprüche, **dadurch gekennzeichnet, dass** die Schicht (72, 74) aus Elastomermaterial vollflächig auf die jeweilige Seite (56, 58) der Zentraleinheit (50) aufgetragen ist.

7. Kombination nach einem der Ansprüche 1 bis 5, **dadurch gekennzeichnet, dass** die Schicht (72, 74) aus Elastomermaterial partiell als lokale Schicht auf die jeweilige Seite (56, 58) der Zentraleinheit (50) aufgetragen ist.

8. Kombination nach einem der voranstehenden Ansprüche, **dadurch gekennzeichnet, dass** die Zentraleinheit (50) eine Zentralplatte (52) umfasst.

9. Kombination nach einem der voranstehenden Ansprüche, **dadurch gekennzeichnet, dass** die Zentraleinheit (50) eine funktionsdefinierende Lage (92) aufweist, dass insbesondere die funktionsdefinierende Lage (92) einer der Flachseiten (62, 64) der Zentralplatte (52) zugewandt angeordnet ist.

10. Kombination nach Anspruch 9, **dadurch gekennzeichnet, dass** die funktionsdefinierende Lage (92) mindestens einen mindestens einem Durchbruch (94) der Zentralplatte (52) zugeordneten Funktionsbereich (96, 112) aufweist, dass insbesondere der mindestens eine Funktionsbereich (96, 112) mit dem mindestens einen Durchbruch (94) in der Zentralplatte (52) überlappend angeordnet ist, dass insbesondere der mindestens eine Funktionsbereich (96, 112) eine Drosselöffnung aufweist, dass insbesondere der mindestens eine Funktionsbereich (96, 112) ein Siebelement (112) aufweist, dass insbesondere die funktionsdefinierende Lage (92) ein mit mindestens einem Funktionsbereich (96, 112) versehenes Flachmaterial umfasst, dass insbesondere die funktionsdefinierende Lage (92) ein mit dem mindestens einem Funktionsbereich (112) versehenes Gitter umfasst.

11. Kombination nach Anspruch 9 oder 10, **dadurch gekennzeichnet, dass** zwischen der funktionsdefinierenden Lage (92) und der Zentralplatte (52) eine Schicht (106) aus einem Verbindungsmaterial vorgesehen ist.

12. Kombination nach einem der Ansprüche 9 bis 11, **dadurch gekennzeichnet, dass** die funktionsdefinierende Lage (92) zwischen der Zentralplatte (52) und einer Abdeckplatte (122) angeordnet ist, dass insbesondere die funktionsdefinierende Lage (92) dicht abschließend mit der Abdeckplatte (122) und der Zentralplatte (52) verbunden ist, dass insbesondere zwischen der Zentralplatte (52) und der funktionsdefinierenden Lage (92) sowie zwischen der Abdeckplatte (122) und der funktionsdefinierenden Lage (92) jeweils eine Schicht (106, 132) aus einem Verbindungsmaterial angeordnet ist, dass insbesondere die funktionsdefinierende Lage (92) in das Verbindungsmaterial eingebettet ist, dass insbesondere die funktionsdefinierende Lage (92) Öffnungen aufweist, welche von dem Verbindungsmaterial durchsetzt sind.

13. Kombination nach Anspruch 11 oder 12, soweit dieser auf Anspruch 11 rückbezogen ist, **dadurch gekennzeichnet, dass** das Verbindungsmaterial ein klebend wirkendes Material ist, dass insbesondere das Verbindungsmaterial ein Elastomermaterial ist, dass insbesondere das Verbindungsmaterial dasselbe Elastomermaterial wie bei den Dichtelementen (66, 68) ist.

14. Kombination nach einem der voranstehenden Ansprüche, **dadurch gekennzeichnet, dass** die Zentralplatte (52) auf einer ersten Flachseite (62) eines der Dichtelemente (66, 68) trägt, dass insbesondere die Zentralplatte (52) auf einer zweiten Flachseite (64) eines der Dichtelemente (66, 68) trägt, dass insbesondere die funktionsdefinierende Lage (92) auf ihrer der Zentralplatte (52) abgewandten Seite eines der Dichtelemente (68) trägt, dass insbesondere das Dichtelement (68) aus dem Elastomermaterial die funktionsdefinierende Lage (92) einbettet.

15. Kombination nach einem der voranstehenden Ansprüche, **dadurch gekennzeichnet, dass** die Abdeckplatte (122) auf ihrer der Zentralplatte (52) abgewandten Seite eines der Dichtelemente (68) trägt.

## Claims

1. A combination of housing parts (12, 14) of a fluid-operated control unit (10), in particular a gear unit, and an intermediate plate (30) mounted between the housing parts (12, 14), including a central unit (50) that is constructed in the shape of a plate and, on either side of the central unit (50), a respective sealing system (66, 68) effecting a seal between the central unit (50) and the housing part (12, 14) opposed thereto, this sealing system including sealing elements (66, 68) which are arranged on the respective side (56, 58) of the central unit (50) and provide sealing around passages (42, 44, 46), wherein the respective sealing system includes as the sealing element (66, 68) at least one layer (72, 74) of an elastomer material that is resilient and adhesive to stick to the respective housing part (12, 14).

2. A combination according to Claim 1, **characterised in that** the elastomer material includes a partly polymerised rubber material, **in that** in particular the rubber material has a degree of polymerisation in the range between 15% or more and 90% or less.

3. A combination according to one of the preceding claims, **characterised in that** the elastomer material includes a fluoropolymer rubber.

4. A combination according to one of the preceding claims, **characterised in that** the layer (72, 74) of elastomer material has a thickness of 5 µm or above, **in that** in particular the layer (72, 74) of elastomer material has a thickness of 100 µm or less.

5. A combination according to one of the preceding claims, **characterised in that** the elastomer material has an adhesive effect which, when the central unit (50) is moved away from the respective housing part (12, 14), results in a draw-off tension of 0.1 kPa or more.

6. A combination according to one of the preceding claims, **characterised in that** the layer (72, 74) of elastomer material is applied to the entire surface of the respective side (56, 58) of the central unit (50).

7. A combination according to one of Claims 1 to 5, **characterised in that** the layer (72, 74) of elastomer material is applied over part of the respective side (56, 58) of the central unit (50), as a localised layer.

8. A combination according to one of the preceding claims, **characterised in that** the central unit (50) includes a central plate (52).

9. A combination according to one of the preceding claims, **characterised in that** the central unit (50) has a function-defining layer (92), **in that** in particular the function-defining layer (92) is arranged facing one of the flat sides (62, 64) of the central plate (52).

10. A combination plate according to Claim 9, **characterised in that** the function-defining layer (92) has at least one functional region (96, 112) that is associated with at least one aperture (94) in the central plate (52), **in that** in particular the at least one functional region (96, 112) is arranged to overlap with the at least one aperture (94) in the central plate (52), **in that** in particular the at least one functional region (96, 112) has a throttle opening, **in that** in particular the at least one functional region (96, 112) has a screening element (112), **in that** in particular the function-defining layer (92) includes a flat material provided with at least one functional region (96, 112), **in that** in particular the function-defining layer (92) includes a grille provided with the at least one functional region (112).

11. A combination according to Claim 9 or 10, **characterised in that** there is provided, between the function-defining layer (92) and the central plate (52), a layer (106) of a connecting material.

12. A combination according to one of Claims 9 to 11, **characterised in that** the function-defining layer (92) is arranged between the central plate (52) and a cover plate (122), **in that** in particular the function-defining layer (92) is connected to the cover plate (122) and the central plate (52) in tightly sealing manner, **in that** in particular a layer (106, 132) of a connecting material is arranged in each case between the central plate (52) and the function-defining layer (92) and between the cover plate (122) and the function-defining layer (92), **in that** in particular the function-defining layer (92) is embedded in the connecting material, **in that** in particular the function-defining layer (92) has openings through which the connecting material passes.

13. A combination according to Claim 11 or 12, **characterised in that** the connecting material is a material having an adhesive effect, **in that** in particular the connecting material is an elastomer material, **in that** in particular the connecting material is the same elastomer material as that of the sealing elements (66, 68).

14. A combination according to one of the preceding claims, **characterised in that** the central plate (52) carries one of the sealing elements (66, 68) on a first flat side (62), **in that** in particular the central plate (52) carries one of the sealing elements (66, 68) on a second flat side (64), **in that** in particular the function-defining layer (92) carries one of the sealing elements (68) on its side remote from the central plate (52), **in that** in particular the function-defining layer (92) is embedded in the sealing element (68) made from the elastomer material.

15. A combination according to one of the preceding claims, **characterised in that** the cover plate (122) carries one of the sealing elements (68) on its side remote from the central plate (52).

## Revendications

1. Ensemble de parties de boîtier (12, 14) d'une unité de commande actionnée par fluide (10), en particulier d'une unité de transmission, et d'une plaque intermédiaire (30) montée entre les parties de boîtier (12, 14), comprenant une unité centrale (50) réalisée en forme de plaque et des deux côtés de l'unité centrale (50) respectivement un système d'étanchéité (66, 68) entraînant une étanchéification entre l'unité centrale (50) et la partie de boîtier (12, 14) opposées à celle-ci, lequel système comprend des éléments d'étanchéité (66, 68) agencés sur le côté respectif (56, 58) de l'unité centrale (50) et assurant l'étanchéité autour de traversées (42, 44, 46), dans laquelle le système d'étanchéité respectif comprend en tant qu'élément d'étanchéité (66, 68) au moins une strate (72, 74) en un matériau élastomère élastique et collant par adhésion sur la partie de boîtier respective (12, 14).

2. Ensemble selon la revendication 1, **caractérisée en ce que** le matériau élastomère comprend un matériau de caoutchouc partiellement polymérisé, qu'en particulier le matériau de caoutchouc présente un degré de polymérisation qui se situe dans la plage entre 15 % ou plus et 90 % ou moins.

3. Ensemble selon l'une quelconque des revendications précédentes, **caractérisée en ce que** le matériau élastomère comprend un caoutchouc de polymère de fluor.

4. Ensemble selon l'une quelconque des revendications précédentes, **caractérisée en ce que** la strate (72, 74) en matériau élastomère présente une épaisseur de 5 µm ou plus, qu'en particulier la strate (72, 74) en matériau élastomère présente une épaisseur de 100 µm ou moins.

5. Ensemble selon l'une quelconque des revendications précédentes, **caractérisée en ce que** le matériau élastomère présente une propriété adhésive qui conduit lors du retrait de l'unité centrale (50) de la partie de boîtier respective (12, 14) à un effort de retrait de 0,1 KPa ou plus.

6. Ensemble selon l'une quelconque des revendications précédentes, **caractérisée en ce que** la strate (72, 74) en matériau élastomère est appliquée sur toute la surface sur le côté respectif (56, 58) de l'unité centrale (50).

7. Ensemble selon l'une quelconque des revendications 1 à 5, **caractérisée en ce que** la strate (72, 74) en matériau élastomère est appliquée partiellement en tant que strate locale sur le côté respectif (56, 58) de l'unité centrale (50).

8. Ensemble selon l'une quelconque des revendications précédentes, **caractérisée en ce que** l'unité centrale (50) comprend une plaque centrale (52).

9. Ensemble selon l'une quelconque des revendications précédentes, **caractérisée en ce que** l'unité centrale (50) présente une couche définissant une fonction (92), qu'en particulier la couche définissant une fonction (92) est agencée tournée vers les côtés plats (62, 64) de la plaque centrale (52).

10. Ensemble selon la revendication 9, **caractérisée en ce que** la couche définissant une fonction (92) présente au moins une zone fonctionnelle (96, 112) affectée à au moins une traversée (94) de la plaque centrale (52), qu'en particulier l'au moins une zone fonctionnelle (96, 112) est agencée de manière à chevaucher l'au moins une traversée (94) dans la plaque centrale (52), qu'en particulier l'au moins une zone fonctionnelle (96, 112) présente une ouverture d'étranglement, qu'en particulier l'au moins une zone fonctionnelle (96, 112) présente un élément tamis (112), qu'en particulier la couche définissant une fonction (92) comprend un matériau plat doté d'au moins une zone fonctionnelle (96, 112), qu'en particulier la couche définissant une fonction (92) comprend une grille dotée de l'au moins une zone fonctionnelle (112).

11. Ensemble selon la revendication 9 ou 10, **caractérisée en ce qu'**une strate (106) en un matériau de liaison est prévue entre la couche définissant une fonction (92) et la plaque centrale (52).

12. Ensemble selon l'une quelconque des revendications 9 à 11, **caractérisée en ce que** la couche définissant une fonction (92) est agencée entre la plaque centrale (52) et une plaque de recouvrement (122), qu'en particulier la couche définissant une fonction (92) est reliée de manière étanche à la plaque de recouvrement (122) et à la plaque centrale (52), qu'en particulier respectivement une strate (106, 132) en un matériau de liaison est agencée entre la plaque centrale (52) et la couche définissant une fonction (92) ainsi qu'entre la plaque de recouvrement (122) et la couche définissant une fonction (92), qu'en particulier la couche définissant une fonction (92) est intégrée dans le matériau de liaison, qu'en particulier la couche définissant une fonction (92) présente des ouvertures, lesquelles sont traversées par le matériau de liaison.

13. Ensemble selon la revendication 11 ou 12, dans la mesure où celle-ci renvoie à la revendication 11, **caractérisée en ce que** le matériau de liaison est un matériau à effet adhésif, qu'en particulier le matériau de liaison est un matériau élastomère, qu'en particulier le matériau de liaison est le même matériau élastomère que pour les éléments d'étanchéité (66, 68).

14. Ensemble selon l'une quelconque des revendications précédentes, **caractérisée en ce que** la plaque centrale (52) porte un des éléments d'étanchéité (66, 68) sur un premier côté plat (62), qu'en particulier la plaque centrale (52) porte un des éléments d'étanchéité (66, 68) sur un deuxième côté plat (64), qu'en particulier la couche définissant une fonction (92) porte un des éléments d'étanchéité (68) sur son côté opposé à la plaque centrale (52), qu'en particulier l'élément d'étanchéité (68) en matériau élastomère intègre la couche définissant une fonction (92).

15. Ensemble selon l'une quelconque des revendications précédentes, **caractérisée en ce que** la plaque de recouvrement (122) porte un des éléments d'étanchéité (68) sur son côté opposé à la plaque centrale (52).
